# EUROPÄISCHE PATENTANMELDUNG

(11) **EP 4 542 106 A1**
(43) Veröffentlichungstag der Anmeldung: **23.04.2025**
(21) Anmeldenummer: 24185212.8
(22) Anmeldetag: 28.06.2024
(51) Int. Cl.: F21S 8/04, F21V 7/00, F21V 8/00, F21Y 103/33, F21Y 113/00, F21Y 115/10

(54) **OPTIKMODUL UND LEUCHTE**

(30) Priorität: 30.06.2023 CH 7052023
(71) Anmelder: Regent Beleuchtungskörper AG, 4053 Basel (CH)
(72) Erfinder: Reutter, Kornelius, 4056 Basel (CH)
(74) Vertreter: Latscha Schöllhorn Partner AG

(57) **Zusammenfassung**

Ein Optikmodul (2) für eine Deckenleuchte (1) umfasst ein transparentes unteres Optikelement (21) und ein oberes Optikelement (22). Das untere Optikelement (21) weist eine Unterseite (214), eine Seitenkante und eine Auslenkstruktur auf. Die Auslenkstruktur ist dazu ausgestaltet, durch die Seitenkante eingestrahltes Licht umzuleiten, sodass es durch die Unterseite (214) abgestrahlt wird. Das obere Optikelement (22) ist mit dem unteren Optikelement (21) verbunden und von diesem optisch getrennt. Das obere Optikelement (22) umfasst eine Oberseite (224) und eine Lichtlenkstruktur (221, 222). Die Lichtlenkstruktur (221, 222) des oberen Optikelements (22) ist dazu ausgebildet, seitlich auf das obere Optikelement (22) gestrahltes Licht von seiner Oberseite (224) abzustrahlen.

## Beschreibung

### Technisches Gebiet

Die Erfindung betrifft ein Optikmodul gemäss dem Oberbegriff des unabhängigen Anspruchs 1 und eine Leuchte insbesondere eine Deckenleuchte mit einem solchen Optikmodul. Diese Art von Optikmodulen mit einem bevorzugt im Wesentlichen plattenförmigen, transparenten Optikelement, das eine Unterseite, eine Seitenkante und eine Auslenkstruktur umfasst, wobei die Auslenkstruktur dazu ausgestaltet ist, durch die Seitenkante eingestrahltes Licht umzuleiten, sodass es durch die Unterseite abgestrahlt wird, können in unterschiedlichen Bereichen in Leuchten und insbesondere Deckenleuchten zur Raumbeleuchtung eingesetzt werden.

### Stand der Technik

Zur Beleuchtung von Räumen oder Arbeitsplätzen werden heutzutage Leuchten in unterschiedlichen auf den jeweiligen Anwendungszweck angepassten Ausführungsformen eingesetzt. Dabei wird zumeist angestrebt, mit den Leuchten Lichtverteilungskurven zu erzeugen, die einer angestrebten Ausleuchtung bei einer bestimmungsgemässen Verwendung der Leuchten möglichst gut entsprechen.

Unter anderem werden zur Beleuchtung von Räumen oftmals Leuchten an Decken der Räume montiert. Solche Leuchten beziehungsweise Deckenleuchten können ein ansprechendes Licht im zugehörigen Raum verteilen und so den Raum ausleuchten. Zudem stellen Deckenleuchten kein eventuell störendes Element im Raum dar, da sie an der Decke montiert sind und somit die Nutzung des Raumes nicht beeinträchtigen.

Um das Licht bevorzugt zu formen und eine gewünschte Raumbeleuchtung zu schaffen, werden in Deckenleuchten Leuchtmittel häufig in Abstrahlrichtung abgedeckt. Dazu werden teilweise transparente Optiken eingesetzt, die das Licht entblenden und teilweise auch formen beziehungsweise richten.

Obwohl diese Art von Deckenleuchten häufig eine gute Beleuchtung bereitstellen kann, gibt es häufig ein Bedürfnis nach mehr Flexibilität. Insbesondere kann die als ideal empfundene Art der Beleuchtung eines Raums individuell sehr unterschiedlich sein, sodass je nach Situation unterschiedliche Arten der Beleuchtung gewünscht sind. Zudem kann sie im Laufe der Zeit oder je nach Raumbenutzung auch ändern.

Der vorliegenden Erfindung liegt daher die Aufgabe zugrunde, eine Leuchte beziehungsweise ein Bauteil für eine Leuchte vorzuschlagen, die beziehungsweise das es ermöglicht auf flexible Art und Weise individuell angepasst einen Raum oder einen Teil davon zu beleuchten.

### Darstellung der Erfindung

Die Aufgabe wird erfindungsgemäss durch ein Optikmodul gelöst, wie es im unabhängigen Anspruch 1 definiert ist, sowie durch eine Leuchte, wie sie im unabhängigen Anspruch 13 definiert ist. Vorteilhafte Ausführungsvarianten der Erfindung ergeben sich aus den abhängigen Ansprüchen.

In einem Aspekt ist die Erfindung ein Optikmodul für eine Deckenleuchte mit einem transparenten unteren Optikelement und einem oberen Optikelement. Das untere Optikelement umfasst eine Unterseite, eine Seitenkante und eine Auslenkstruktur. Die Auslenkstruktur ist dazu ausgestaltet, durch die Seitenkante eingestrahltes Licht umzuleiten, sodass es durch die Unterseite abgestrahlt wird.

Das obere Optikelement ist mit dem unteren Optikelement verbunden und von diesem optisch getrennt. Es umfasst eine Oberseite und eine Lichtlenkstruktur. Die Lichtlenkstruktur ist dazu ausgebildet, seitlich auf das obere Optikelement gestrahltes Licht von seiner Oberseite abzustrahlen.

Der Begriff «Modul» im Zusammenhang mit der Erfindung kann sich auf eine Konstruktion im Sinne einer Einheit beziehen. Dabei kann die Einheit als Bauteil in eine Einrichtung fest oder wechselbar eingebaut sein. Insbesondere kann das Optikmodul dazu vorgesehen sein, in einer Deckenleuchte verbaut zu sein.

Der Begriff «Deckenleuchte» bezieht sich auf eine Leuchte die dazu vorgesehen ist, an einer Raumdecke montiert zu werden und von da aus Licht abzustrahlen beziehungsweise einen Raum zu beleuchten. Dabei kann die Deckenleuchte als Pendelleuchte, als Anbauleuchte, als fest an einer Raumdecke zu montierende Leuchte oder auf ähnliche Weise ausgebildet sein.

Der Begriff «unteres» beziehungsweise «oberes» im Zusammenhang mit den Optikelementen bezieht sich auf eine Richtung in einem bestimmungsgemässen Gebrauch des Optikmoduls. Insbesondere kann mit dem unteren Optikelement das Optikelement gemeint sein, das unter dem oberen Optikelement angeordnet ist, wenn das Optikmodul in einer Leuchte beziehungsweise Deckenleuchte verbaut und diese an einer Decke montiert ist.

Der Begriff «transparent» bezieht sich im Zusammenhang mit dem Optikmodul beziehungsweise den Optikelementen auf eine Durchlässigkeit beziehungsweise eine zumindest teilweise Durchlässigkeit für sichtbares Licht, das von einem Leuchtmittel der Leuchte, für die das Optikmodul vorgesehen ist, abgegeben beziehungsweise abgestrahlt wird. Der Begriff "lichtdurchlässig" wiederum kann sich insbesondere auf eine gedämpfte oder ungedämpfte Durchlässigkeit des mittels eines Leuchtmittels erzeugten Lichts beziehen.

Das untere Optikelement kann transparent sein, indem es aus einem geeigneten Material hergestellt ist beziehungsweise ein Substrat aus einem solchen Material umfasst. Dabei kann insbesondere ein Kunststoff wie beispielsweise Polymethylmethacrylat (PMMA) beziehungsweise Acrylglas eingesetzt werden. In solchen Kunststoffen kann die Auslenkstruktur effizient geformt werden.

Mittels der Auslenkstruktur kann das über die Unterseite abgestrahlte Licht bevorzugt geformt sein. Insbesondere kann die Auslenkstruktur so angepasst sein, dass eine bevorzugte Lichtverteilungskurve (LVK) erzeugt wird. So kann ein zweckmässiges beziehungsweise zielgerichtetes Downlight erzeugt werden. Zudem ermöglicht eine Lichtformung mittels einer solchen Auslenkstruktur beziehungsweise einem solchen unteren Optikelement, dass das Licht sowohl gerichtet als auch entblendet ist und somit als effizient und komfortabel für die Augen empfunden werden kann. Die Auslenkstruktur kann dazu ausgestaltet sein, zu verhindern, dass in das untere Optikelement durch seine Seitenkante eingestrahltes Licht das Optikelement im Wesentlichen gradlinig durchdringt. Insbesondere kann mit der Auslenkstruktur das Optikelement durchdringendes also quer und beispielsweise quasi horizontal durch das Optikelement strömendes Licht umgeleitet beziehungsweise in eine Abstrahlrichtung abgelenkt werden.

Die Seitenkante des unteren Optikelements kann angewinkelt zur Unterseite liegen und insbesondere in einem quasi rechten Winkel dazu stehen. Sie kann als Fläche geformt sein. Die Seitenkante und/oder die Unterseite des unteren Optikelements können im Wesentlichen plan beziehungsweise glattflächig sein. Auch könnte der Seitenkante eine Kollimator-Optik oder ein ähnliches optisches Element zur besseren Einkopplung des Lichts in das untere Optikelement zugeordnet sein.

Der Begriff «optisch getrennt» bezieht sich darauf, dass kein Licht vom unteren Optikelement auf das obere Optikelement geleitet wird und umgekehrt. Eine zweckmässige optische Trennung kann also insbesondere durch ein quasi vollständige Lichtundurchlässigkeit erreicht werden.

Der Begriff «Lichtlenkstruktur» im Zusammenhang mit dem oberen Optikelement kann sich auf eine Umlenkung beziehungsweise Reflexion des seitlich auf die Oberfläche gestrahlten Lichts beziehen. Beispielsweise kann die Lichtlenkstruktur als reflektierende und geformte Gestaltung der Oberseite des oberen Optikelements ausgebildet sein.

Das Licht kann seitlich auf das obere Optikelement gestrahlt werden, indem es von einem Leuchtmittel direkt oder über weitere optische Komponenten wie beispielsweise eine transparente Abdeckung quasi radial nach aussen oder innen gestrahlt wird und so quasi flach auf das obere Optikelement trifft. Im Betrieb einer Leuchte mit dem Optikmodul kann eine Hauptabstrahlrichtung des auf das obere Optikelement gestrahlten Lichts quasi horizontal sein.

Der Begriff "Hauptabstrahlrichtung" wird vorliegend als die Richtung verstanden, in die ein Leuchtmittel oder eine Leuchte beziehungsweise eine Optik oder ein Optikmodul hauptsächlich, mehrheitlich oder bestimmungsgemäss abstrahlt. Typischerweise strahlen Leuchtmittel beziehungsweise Leuchten beziehungsweise Optiken oder Optikmodule Licht zumindest in einem gewissen Ausmass auch in andere Richtungen als der einen oder mehreren Hauptabstrahlrichtung(en) ab (Streuung). Als Hauptabstrahlrichtung kann die Richtung verstanden werden, in die das Leuchtmittel beziehungsweise die Leuchte beziehungsweise die Optik oder das Optikmodul zu einem bestimmten Zweck leuchten soll und dazu ausgebildet ist. In einer Lichtverteilungskurve zeigt sich die Hauptabstrahlrichtung typischerweise als ein Maximum. Generell können eine Leuchte beziehungsweise seine Optik(en) oder sein Optikmodul auch mehrere Hauptabstrahlrichtungen aufweisen.

Das erfindungsgemässe Optikmodul ermöglicht es einer Leuchte, spezifisch eine Raumbeleuchtung mit mittels des oberen Optikelements über die Decke abgestrahltem Indirektlicht und/oder mittels des unteren Optikelements erzeugtem Direktlicht (Downlight) zu schaffen. Dabei gewährleistet die optische Trennung von oberem und unterem Optikelement, dass Direktlicht und Indirektlicht unabhängig voneinander sind. Zudem können Leuchtmittel eingesetzt werden, mit denen sowohl mit dem Indirektlicht als auch mit dem Direktlicht ein Raum genügend hell ausgeleuchtet wird. Dadurch kann das Optikmodul eine äusserst flexible und individuelle Lichtplanung beziehungsweise Beleuchtung ermöglichen.

Vorzugsweise umfasst das Optikmodul eine Trennschicht, welche das obere Optikelement vom unteren Optikelement optisch trennt. Mittels einer solchen Trennschicht kann eine zielführende optische Trennung des unteren Optikelements vom oberen Optikelement vorgesehen sein.

Die Trennschicht ist dabei vorzugsweise als Folie ausgebildet. Indem die Trennschicht als Folie ausgebildet ist, kann eine sehr flache beziehungsweise kompakte Bauweise des Optikmoduls erreicht werden. So kann das Optikmodul zurückhaltend und ästhetisch ansprechend ausgestaltet sein. Zudem kann eine Folie effizient lichtdicht sein, sodass die optische Trennung gewährleistet ist.

Die Trennschicht ist vorzugsweise in Richtung des unteren Optikmoduls reflektierend ausgebildet. Um reflektierend ausgebildet zu sein, kann die Trennschicht beziehungsweise die Folie zumindest auf seiner dem unteren Optikelement zugewandten Seite weiss beziehungsweise hell gefärbt oder spiegelnd beziehungsweise reflektierend ausgestaltet sein. Durch eine solche reflektierende Trennschicht, kann die Effizienz einer Leuchte mit dem Optikmodul insbesondere hinsichtlich des Direktlichts besonders hoch sein, da nur in einem geringen Umfang Licht im Optikmodul absorbiert wird oder auf andere Weise verloren geht.

Dabei ist die Trennschicht vorzugsweise als TIR-Element ausgestaltet. Das fachübliche Akronym «TIR» steht in diesem Zusammenhang für den englischen Begriff «Total Internal Reflection», der für interne Totalreflexion steht. Unter interner Totalreflexion wird die verlustfreie Reflexion eines Lichtstrahls von einer Oberfläche infolge von zugrunde liegenden physikalischen Prinzipien verstanden. TIR-Elemente sind typischerweise Kombinationen von Reflektoren und Linsen. Sie erzeugen einen häufig parallelen Lichtstrahl mittels Lichtbrechung und Reflexion. Das TIR-Element kann im unteren Optikmodul selbst ausgeformt, ein Bestandteil des oberen Optikelements oder ein eigenes Bauteil sein. Mit einem solchen TIR-Element kann das Licht effizient und quasi verlustfrei in das untere Optikelement geleitet beziehungsweise in diesem belassen werden.

Vorzugsweise ist das Optikmodul quasi scheibenförmig ausgestaltet. Der Begriff «scheibenförmig» beziehungsweise «Scheibe» kann sich auf eine flache dreidimensionale Gestaltung beziehen, deren flächige Ausdehnung wesentlich grösser ist als deren Dicke beziehungsweise Breite. Mit einem scheibenförmigen Optikmodul kann eine flache Gestalt erreicht werden, was insbesondere bei Deckenleuchten häufig gewünscht ist. Zudem kann Licht auf eine verhältnisweise grosse Fläche verteilt abgestrahlt werden.

Dabei weist das Optikmodul vorzugsweise eine runde äussere Abgrenzung auf. Die Abgrenzung kann insbesondere in einer Aufsicht auf das scheibenförmige Optikmodul rund sein. Dabei kann sich der Begriff «rund» auf kreisförmig oder auch andere runde Formen wie beispielsweise oval beziehen.

Das scheibenförmige Optikmodul umfasst vorzugsweise einen zentralen Durchgang, der sich durch das obere Optikelement und das untere Optikelement hindurch erstreckt. Das Optikmodul kann so ringförmig und insbesondere ringscheibenförmig ausgestaltet sein. Bei einem solchen ringscheibenförmigen Optikmodul kann die Seitenkante des unteren Optikelement insbesondere die innere Seitenkante sein. Auch das obere Optikelement kann von innen her von einem Leuchtmittel angestrahlt werden. Der Durchgang ermöglicht einen Zugriff durch das Optikmodul hindurch. Zudem kann er Platz schaffen für andere Komponenten der Leuchte wie Sensoren oder ähnliches. Beispielsweise kann im Durchgang eine Helligkeitssensor und/oder ein Bewegungssensor angeordnet sein. An dieser Stelle angeordnete Sensoren können besonders effizient und genau Informationen wie die Helligkeit des Downlights oder die Anwesenheit einer Person im Raum ermitteln. Zudem ermöglicht eine solche Ausgestaltung des Durchgangs, der eventuell mit einem Sensor bestückt ist, ein ruhiges Erscheinungsbild, was als ästhetisch empfunden werden kann.

Vorzugsweise ist das Optikmodul dazu ausgestaltet, Licht von der Oberseite des oberen Optikelements flacher abzustrahlen als durch die Unterseite des unteren Optikelements. Mit einer solchen Konfiguration kann eine angepasste Kombination von Downlight beziehungsweise Direktlicht und Indirektlicht erzeugt werde. Häufig haben Indirektleuchten, die an Decken hängen, eine vergleichsweisen flachen Abstrahlwinkel. Dies hat typischerweise den Zweck, das Licht möglichst über eine grosse Fläche in den Raum zu bringen, obwohl der Abstand zu Decke üblicherweise vergleichsweise klein ist. Das flacher nach oben abgestrahlte Licht kann also so erzeugt werden, dass ein Raum beziehungsweise ein Raumabschnitt in gewünschtem Ausmass ausgeleuchtet wird. Zusätzlich kann das nach unten abgestrahlte Licht analog zu typischen Pendelleuchten den Raum mit einem spitzeren Abstrahlwinkel ausleuchten. Das Optikmodul eröffnet durch eine solche Ausgestaltung unterschiedliche Arten und eine flexible Gestaltung der Raumbeleuchtung.

Vorzugsweise ist das obere Optikelement des Optikmoduls als Reflektor ausgebildet. Ein solcher Reflektor kann auf effiziente Weise Licht umleiten. Insbesondere haben Reflektoren typischerweise einen hohen Wirkungsgrad, sodass vergleichsweise viel von dem auf den Reflektor gerichteten Licht an die Decke umgeleitet werden kann. Ein solches oberes Optikelement als Reflektor kann beispielsweise aus einem geformten Metallblech hergestellt sein.

Vorzugsweise umfasst die Auslenkstruktur des unteren Optikelements Prismen, die zum Umlenken des Lichts ausgestaltet sind. Mit Prismen kann Licht auf vielfältige Weise gerichtet beziehungsweise geformt werden. Dadurch ist es möglich, Licht bereitzustellen, das angepasst auf den spezifischen Einsatz des Optikmoduls beziehungsweise einer Leuchte mit dem Optikmodul abgestrahlt beziehungsweise geformt ist. Auch kann ein solches unteres Optikelement mit Prismen bevorzugt entblendet sein.

Dabei sind die Prismen der Auslenkstruktur vorzugsweise als Linienprismen ausgebildet. Die Linienprismen der Auslenkstruktur können in vorteilhafter Weise quasi rechtwinklig zum durch die eine der Seitenkanten eingestrahlten Licht und somit quasi parallel zur Seitenkante angeordnet sein.

Die Prismen der Auslenkstruktur sind mit Vorteil in Bezug auf die Unterseite gleichmässig verteilt. Bei Linienprismen können beispielsweise die Abstände zwischen den einzelnen Linien gleichmässig beziehungsweise einheitlich sein. Dadurch kann eine gleichmässige Abstrahlung des Lichts durch die Unterseite erreicht werden.

In einem anderen Aspekt ist die Erfindung eine Leuchte mit einem Optikmodul wie vorstehen beschrieben, einem unteren Leuchtmittel und einem oberen Leuchtmittel. Das untere Leuchtmittel ist entlang der Seitenkante des unteren Optikelements so angeordnet, dass vom unteren Leuchtmittel abgestrahltes Licht durch die Seitenkante in das untere Optikelement einstrahlt. Das obere Leuchtmittel ist benachbart zum oberen Optikelement so angeordnet, dass vom oberen Leuchtmittel abgestrahltes Licht seitlich auf das obere Optikelement strahlt. Dabei kann das obere Leuchtmittel durchgehend seitlich auf das obere Optikelement strahlen oder in Segmente unterteilt. Beispielsweise kann mit einer solchen segmentierten Lichtbestrahlung erreicht werden, dass bei einem runden Optikmodul lediglich Winkelsegmente leuchten, wodurch eine in einen Teil eines Raums strahlende Leuchte erzeugt würde.

Mit der erfindungsgemässen Leuchte und ihrer nachfolgenden bevorzugten Ausführungsformen können die im Zusammenhang mit dem erfindungsgemässen Optikmodul und seiner vorstehenden bevorzugten Ausführungsformen beschriebenen Vorteile und Effekte effizient und zuverlässig implementiert sein.

Die erfindungsgemässe Leuchte kann insbesondere eine Deckenleuchte sein.

Vorzugsweise sind das obere Leuchtmittel und das untere Leuchtmittel jeweils als Leuchtdioden-Streifen ausgestaltet. Leuchtdioden-Streifen beziehungsweise LED-Streifen beziehungsweise LED-Strips ermöglichen eine flexible räumliche Anordnung als Leuchtmittel. Beispielsweise können sie entlang einer nicht linearen anderen Struktur verlaufen. So können sie für die Verwendung in der Leuchte besonders vorteilhaft sein. Weiter können Leuchtdioden-Streifen ein vergleichsweise starkes Licht beziehungsweise Licht mit einer vergleichsweise hohen Stärke oder Intensität abgeben.

Vorzugsweise umfasst die Leuchte eine Halterung, an der das untere Leuchtmittel und das obere Leuchtmittel angeordnet sind. Eine solche Halterung ermöglicht ein effizientes Halten und gezieltes Ausrichten beziehungsweise Positionieren der beiden Optikmodule sowie auch der beiden Leuchtmittel.

Dabei ist die Halterung vorzugsweise aus mehreren aufeinander liegenden Scheiben gebildet. Ein solche Halterung ermöglicht eine vergleichsweise flache Bauweise der Leuchte. Zudem kann sie flexibel und effizient hergestellt werden.

Vorzugsweise umfasst die Leuchte einen Kühlkörper, wobei der Kühlkörper benachbart zur Oberseite des oberen Optikelements mit dem Optikmodul verbunden ist und wobei der Kühlkörper einen hohlen Innenraum aufweist. Durch seinen hohlen Innenraum kann der Kühlkörper gleichzeitig ein Gehäuse der Leuchte bilden. In einem solchen Gehäuse können weitere Komponenten der Leuchte geschützt angeordnet sein.

Der Kühlkörper ist vorzugsweise an der Halterung montiert. So kann eine effiziente und präzise zueinander ausgerichtete Konstruktion der Bauteile der Leuchte erreicht werden.

Dabei sind das Optikmodul, die Halterung und der Kühlkörper vorzugsweise konzentrisch entlang einer Achse angeordnet. Dies ermöglicht eine kompakte und robuste Ausgestaltung in einer ästhetisch ansprechenden Weise.

Die Leuchte umfasst vorzugsweise ein Betriebsgerät, das im Innenraum des Kühlkörpers angeordnet ist. Auf diese Weise bildet der Kühlkörper gleichzeitig ein Gehäuse der Leuchte. Durch einen so kombinierten Gehäuse-Kühlkörper kann eine kompakte Bauweise erreicht werden.

Der Kühlkörper ist vorzugsweise quasi zylinderförmig geformt. Ein solcher Kühlkörper ermöglicht eine robuste und ästhetisch ansprechende Konstruktion mit einem vergleichsweise hohen Kühleffekt.

Dabei weist der Kühlkörper vorzugsweise mehrere axiale Luftstromdurchgänge auf. Solche Luftstromdurchgänge ermöglichen es Luft zu den Leuchtmitteln zu- und abzuführen. Dabei kann die abgeführte Luft gerade gekühlt werden, wenn sie den Kühlkörper durchströmt.

Der Kühlkörper umfasst vorzugsweise sich nach aussen und/oder innen erstreckende Kühllamellen. Die Kühllamellen ermöglichen es, eine wesentlich erhöhte Wärmeaustauschfläche bereit zu stellen. Dadurch kann die Kühlwirkung des Kühlkörpers wesentlich erhöht werden.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden das erfindungsgemässe Optikmodul und die erfindungsgemässe Leuchte unter Bezugnahme auf die beigefügten Zeichnungen anhand von Ausführungsbeispielen detaillierter beschrieben. Es zeigen:
- Fig. 1: eine perspektivische Unteransicht eines ersten Ausführungsbeispiels einer erfindungsgemässen Leuchte mit einem ersten Ausführungsbeispiel eines erfindungsgemässen Optikmoduls;
- Fig. 2: eine Seitenansicht der Leuchte von Fig. 1;
- Fig. 3: eine perspektivische Ansicht eines unteren Optikelements des Optikmoduls der Leuchte von Fig. 1;
- Fig. 4: eine seitliche Querschnittsansicht der Leuchte von Fig. 1;
- Fig. 5: eine perspektivische Ansicht eines oberen Optikelements des Optikmoduls der Leuchte von Fig. 1;
- Fig. 6: eine perspektivische Oberansicht der Leuchte von Fig. 1;
- Fig. 7: eine schematische Ausleuchtung eines Raumes mit der an einer Raumdecke befestigten Leuchte von Fig. 1;
- Fig. 8: eine Lichtverteilungskurve der Leuchte von Fig. 7;
- Fig. 9: eine perspektivische Unteransicht eines zweiten Ausführungsbeispiels einer erfindungsgemässen Leuchte mit einem zweiten Ausführungsbeispiel eines erfindungsgemässen Optikmoduls;
- Fig. 10: eine Seitenansicht der Leuchte von Fig. 9;
- Fig. 11: eine seitliche Querschnittsansicht der Leuchte von Fig. 9; und
- Fig. 12: eine perspektivische Oberansicht der Leuchte von Fig. 9.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispielen zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

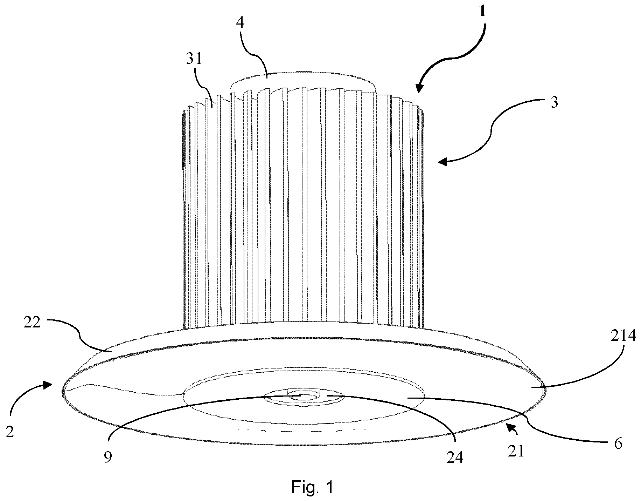

Fig. 1 zeigt eine erste Deckenleuchte 1 als erstes Ausführungsbeispiel einer erfindungsgemässen Leuchte. Die Deckenleuchte 1 weist einen quasi kreiszylinderförmigen Kühlkörper 3 auf und ist mit einem ersten Ausführungsbeispiel eines erfindungsgemässen Optikmoduls 2 ausgestattet. Das Optikmodul 2 ist kreisringscheibenförmig und unterhalb des Kühlkörpers 3 angeordnet. Es umfasst ein unteres Optikelement 21 mit einer Unterseite 214 und ein oberes Optikelement 22. Zudem ist es mit einem zentralen Durchgang 24 ausgestattet, der teilweise von einer Abdeckung 6 geschlossen ist. Im Durchgang 24 des Optikmoduls 2 ist eine Sensoreinheit 9 angeordnet, die einen Helligkeitssensor und einen Bewegungssensor umfasst.

Der Kühlkörper 3 ist an seinem Umfang mit etwa vierzig sich nach aussen erstreckenden Kühllamellen 31 versehen. Die Kühllamellen 31 sind jeweils in einer Aufsicht gekrümmt beziehungsweise tangential gebogen geformt. An einer Oberseite ist der Kühlkörper 3 mit einem Deckenadapter 4 ausgestattet, über den die erste Deckenleuchte 1 an einer Raumdecke montiert werden kann.

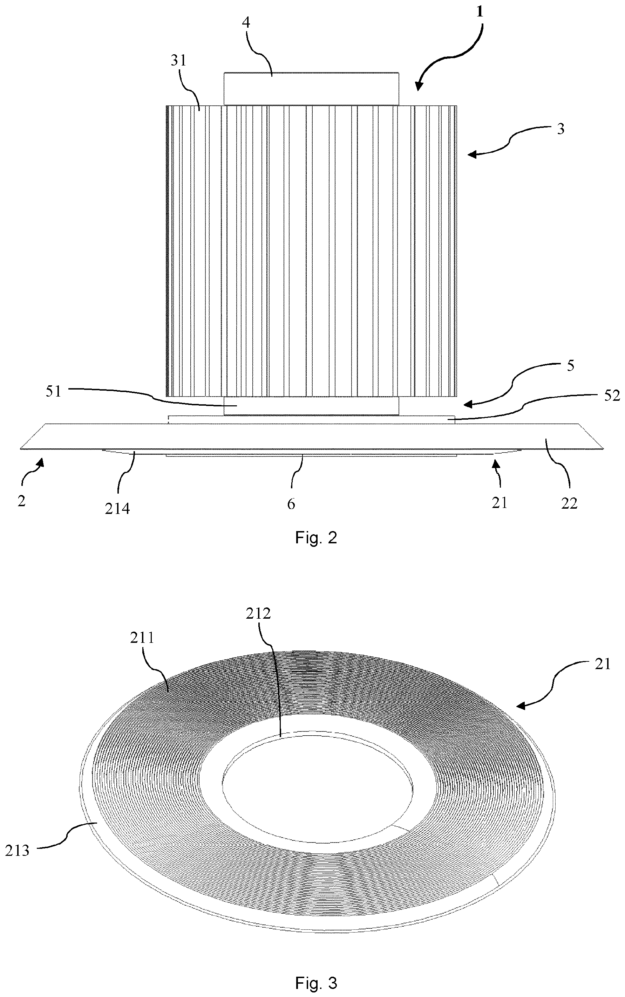

In Fig. 2 ist die erste Deckenleuchte 1 von einer Seite gezeigt. Dabei ist eine Halterung 5 sichtbar, die eine obere Halteplatte 51 und eine mittlere Halteplatte 52 umfasst. Der Kühlkörper 3 und das Optikmodul 2 sind an der Halterung 5 befestigt, sodass die ganze Deckenleuchte 1 eine Einheit bildet. Insbesondere sind der Kühlkörper 3, die Halterung 5 und das Optikmodul 2 konzentrisch entlang einer Längsachse angeordnet.

Fig. 3 zeigt das untere Optikelement 21 des Optikmoduls 2 in einer perspektivischen Ansicht. Das untere Optikelement 21 ist einstückig aus einem transparenten Material hergestellt. Es ist im Wesentlichen kreisringscheibenförmig ausgestaltet und umfasst eine äussere Seitenkante 213 und eine innere Seitenkante 212 auf. Die beiden Seitenkanten 212, 213 umschreiben jeweils eine kreisförmige Bahn.

Das untere Optikelement 21 umfasst eine Serie von integralen Linienprismen 211 als Auslenkstruktur. Insbesondere sind die Linienprismen 211 dazu ausgebildet, über die innere Seitenkante 212 in das untere Optikelement 21 eingestrahltes Licht selektiv umzulenken und über die Unterseite 214 des unteren Optikelements 21 abzustrahlen.

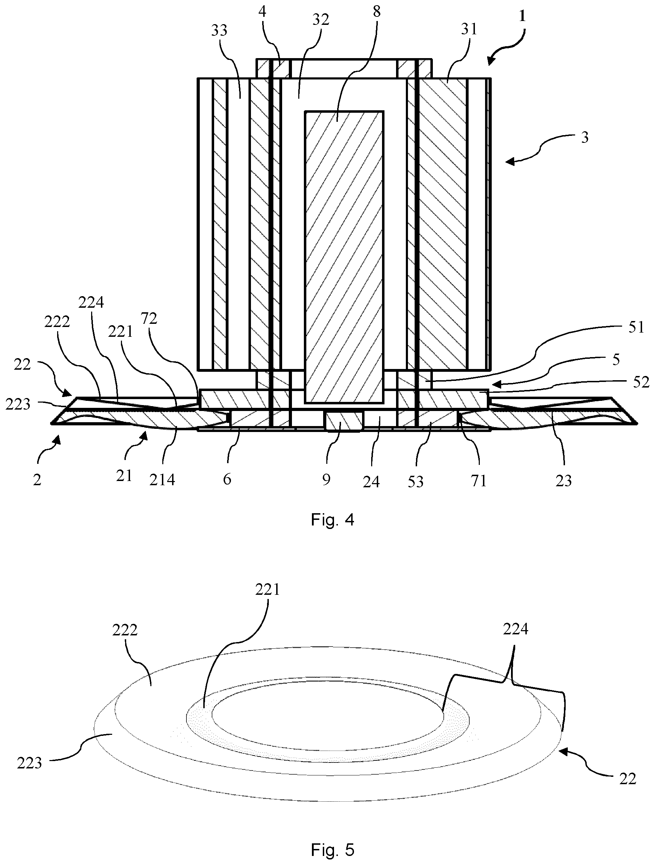

In Fig. 5 ist das obere Optikelement 22 des Optikmoduls 2 gezeigt. Das obere Optikelement 22 ist ein aus einem umgeformten hochpolierten Metallblech gebildeter Reflektor. Es ist im Wesentlichen kreisringförmig und umfasst eine Oberseite 224 mit einem inneren abfallenden Bereich 221 und einem äusseren abfallenden Bereich 222, die an einer kreisförmigen Vertiefungslinie ineinander übergehen. An seinem äusseren Ende geht der äussere abfallende Bereich 222 in einen Randbereich 223 des oberen Optikelements 22 über.

Fig. 4 zeigt die erste Deckenleuchte in einer Querschnittsansicht, sodass auch interne Komponenten und Strukturen sichtbar sind. Insbesondere ist ersichtlich, dass der Kühlkörper 3 einen hohlen Innenraum 32 aufweist. Im Innenraum 32 ist ein Betriebsgerät 8 angeordnet. Der Kühlkörper 3 bildet ein Gehäuse der ersten Deckenleuchte 1.

Die Halterung 5 umfasst neben der oberen Halteplatte 51 und der mittleren Halteplatte 52 eine untere Halteplatte 53. Die drei Halteplatten 51, 52, 53 sind jeweils als Kreisringplatten mit einer identischen zentralen Öffnung aber unterschiedlichen Radien ausgebildet. Insbesondere weist die obere Halteplatte 51 den kleinsten Radius auf und die mittlere Halteplatte 52 den grössten Radius.

Die untere Halteplatte 53 ist dem unteren Optikelement 21 zugeordnet, indem sie innerhalb der zentralen Öffnung des unteren Optikelements 21 liegt. Dabei ist ein Aussenrand der unteren Halteplatte 53 mit einem unteren Leuchtdioden-Streifen 71 als Leuchtmittel bestückt. Die Leuchtdioden des unteren Leuchtdioden-Streifens 71 sind so ausgerichtet, dass von ihnen abgestrahltes Licht radial durch die innere Seitenkante 212 in das untere Optikelement 21 radial nach aussen einstrahlt. Im unteren Optikelement 21 wird das so eingestrahlte Licht von den Linienprismen 211 umgelenkt, geformt und nach unten in einer definierten Art und Weise als Direktlicht abgegeben.

In ähnlicher Weise ist die mittlere Halteplatte 52 dem oberen Optikelement 22 zugewiesen, indem sie innerhalb der zentralen Öffnung des oberen Optikelements 22 liegt. Ein Aussenrand der mittleren Halteplatte 52 ist mit einem oberen Leuchtdioden-Streifen 72 als Leuchtmittel ausgestattet. Die Leuchtdioden des oberen Leuchtdioden-Streifens 72 sind so ausgerichtet, dass von ihnen abgestrahltes Licht radial auf die geformte Oberfläche des oberen Optikelements 22 strahlt. Dabei wird das Licht grösstenteils am inneren abfallenden Bereich 221 vorbei auf den äusseren abfallenden Bereich 222 gestrahlt von dem es in vordefinierter Weise nach oben als Indirektlicht reflektiert wird.

Zwischen dem oberen Optikelement 22 und dem unteren Optikelement 21 ist eine Trennfolie 23 eingelegt, welche die beiden Optikelemente 21, 22 optisch voneinander trennt. Eine Unterseite der Trennfolie 23 ist dabei reflektiv ausgestaltet, sodass auf diese Seite auftreffendes Licht nach unten in das untere Optikelement 21 geleitet wird. Das untere Optikelement 21 ist in das obere Optikelement 22 eingelegt, sodass der Randbereich 223 des oberen Optikelements 22 die äussere Seitenkante 213 des unteren Optikelements 21 nach aussen hin abdeckt. Das untere Optikelement 21 und das äussere Optikelement 22 sind miteinander verbunden.

Die Spalte zwischen den Kühllamellen 31 des Kühlkörpers 3 bilden Luftstromdurchgänge 33. Insbesondere kann Luft im Bereich der oberen Halteplatte 51 zwischen der mittleren Halteplatte 52 und dem Kühlkörper 3 vorbei durch die Luftstromdurchgänge 33 nach oben strömen und insbesondere den oberen Leuchtdioden-Streifen 72 sowie auch den unteren Leuchtdioden-Streifen 71 kühlen. Zudem kann Luft an der Sensoreinheit 8 vorbei durch die zentralen Öffnungen der drei Halteplatten 51, 52, 53 beziehungsweise den Durchgang 24 und am Betriebsgerät 8 vorbei durch den Innenraum 32 des Kühlkörpers 3 nach oben strömen. Auf diese Weise kann weiter eine Luftkühlung bereitgestellt werden und der Innenraum 32 kann gleichzeitig als Luftstromdurchgang funktionieren.

Das Betriebsgerät 8 ist an die beiden Leuchtdioden-Streifen 71, 72 und an die Sensoreinheit 9 angeschlossen. Zudem ist es en eine Steuereinheit gekoppelt, über welche die Deckenleuchte 1 eingestellt beziehungsweise konfiguriert werden kann.

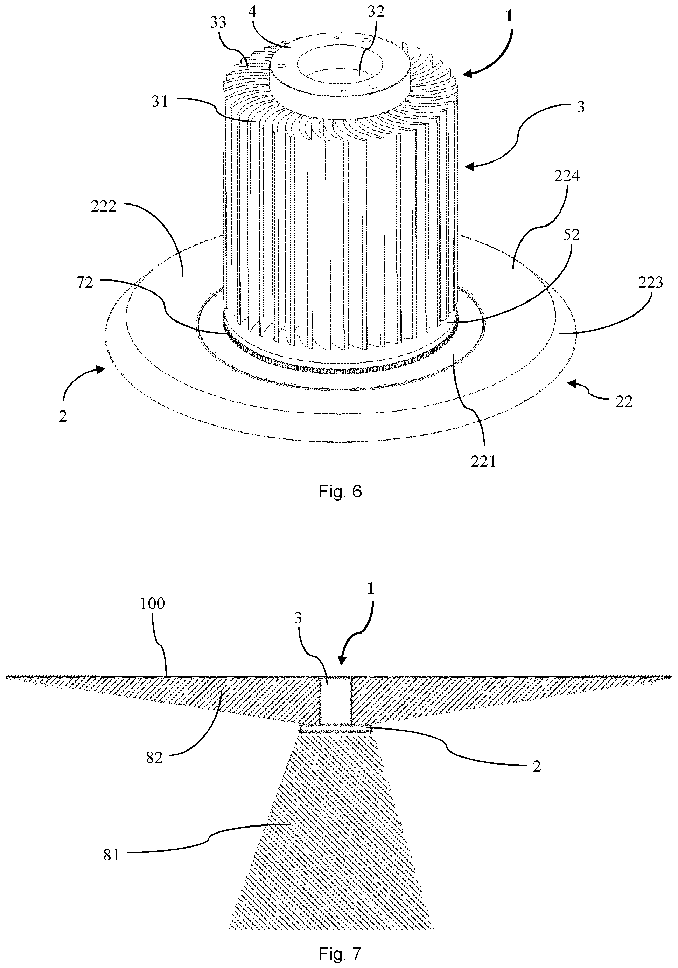

In Fig. 6 ist die erste Deckenleuchte 1 perspektivisch von oben gezeigt. Dabei ist ersichtlich, dass der obere Leuchtdioden-Streifen 72 entlang des gesamten Umfangs der mittleren Halteplatte 52 verläuft und somit das obere Optikelement 22 gleichmässig anstrahlt.

Fig. 7 zeigt schematisch die Deckenleuchte 1 in Betrieb. Dabei ist die Deckenleuchte 1 über den Deckenadapter 4 an einer Raumdecke 100 befestigt. Das Optikmodul 2 ist durch den Kühlkörper 3 in einem vordefinierten Abstand von der Raumdecke 100. Das durch den unteren Leuchtdioden-Streifen 71 erzeugte Licht wird durch das untere Optikelement 21 umgeleitet, geformt und als Direktlicht 81 beziehungsweise Downlight aus der Unterseite 214 des unteren Optikelements 21 von der Deckenleuchte 1 nach unten in den Raum abgegeben. Das durch den oberen Leuchtdioden-Streifen 72 erzeugte Licht wird von der Oberseite 224 des oberen Optikelements 22 umgeleitet, geformt und nach oben als Indirektlicht 82 an die Raumdecke 100 abgegeben. Von der Raumdecke 100 scheint das Licht wiederum in den Raum und beleuchtet diesen indirekt. Das Indirektlicht 82 weist einen flacheren Abstrahlwinkel auf als das Direktlicht 81. Die Deckenleuchte 1 ist einstellbar, sodass der Umfang von Direktlicht 81 und Indirektlicht 82 frei festgelegt werden. Auch kann ein Verhältnis zwischen Direktlicht 81 und Indirektlicht 82 bedürfnisgerecht definiert werden. Die Deckenleuchte 1 ist so ausgestaltet, dass der Raum sowohl einzig durch das Direktlicht 81 als auch einzig durch das Indirektlicht 82 ausreichend beleuchtet beziehungsweise erhellt werden kann.

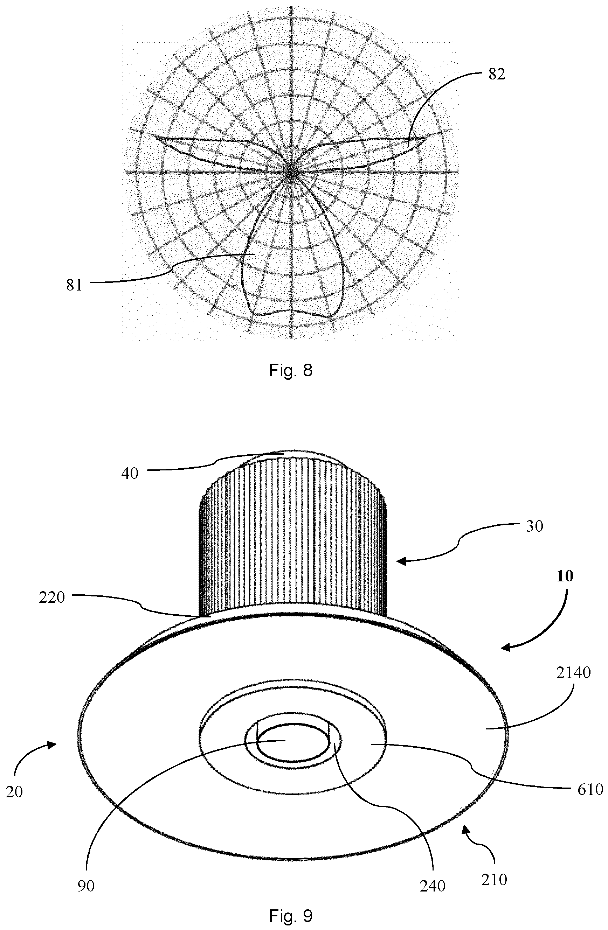

In Fig. 8 ist eine Lichtverteilungskurve (LVK) von mittels der Deckenleuchte 1 erzeugtem Licht gezeigt. Insbesondere sind auch in der LVK die Anteile des Direktlichts 81 und des Indirektlichts 82 schön ersichtlich.

Fig. 9 zeigt eine zweite Deckenleuchte 10 als zweites Ausführungsbeispiel einer erfindungsgemässen Leuchte. Die zweite Deckenleuchte 10 ist grundsätzlich ähnlich aufgebaut wie die oben beschriebene erste Deckenleuchte 1. Insbesondere weist die zweite Deckenleuchte 10 eine der ersten Deckenleuchte 1 entsprechende Funktions- und Anwendungsweise auf, wie sie beispielsweise in der Fig. 7 und Fig. 8 illustriert ist.

Die zweite Deckenleuchte 10 weist einen quasi kreiszylinderförmigen Kühlkörper 3 auf, der eine gewellte Aussenfläche aufweist. Zudem umfasst die zweite Deckenleuchte 10 ein zweites Ausführungsbeispiel eines erfindungsgemässen Optikmoduls 20. Das Optikmodul 20 ist quasi kreisringscheibenförmig ausgebildet und unterhalb des Kühlkörpers 30 angeordnet. Es umfasst ein unteres Optikelement 210 mit einer Unterseite 2140 und ein oberes Optikelement 220. Zudem ist es mit einem zentralen Durchgang 240 ausgestattet, der teilweise von einer unteren Abdeckung 610 geschlossen ist. Im Durchgang 240 des Optikmoduls 20 ist eine Sensoreinheit 90 angeordnet, die einen Helligkeitssensor und einen Bewegungssensor umfasst. An einer Oberseite ist der Kühlkörper 30 mit einem Deckenadapter 40 ausgestattet, über den die zweite Deckenleuchte 10 an einer Raumdecke montiert werden kann.

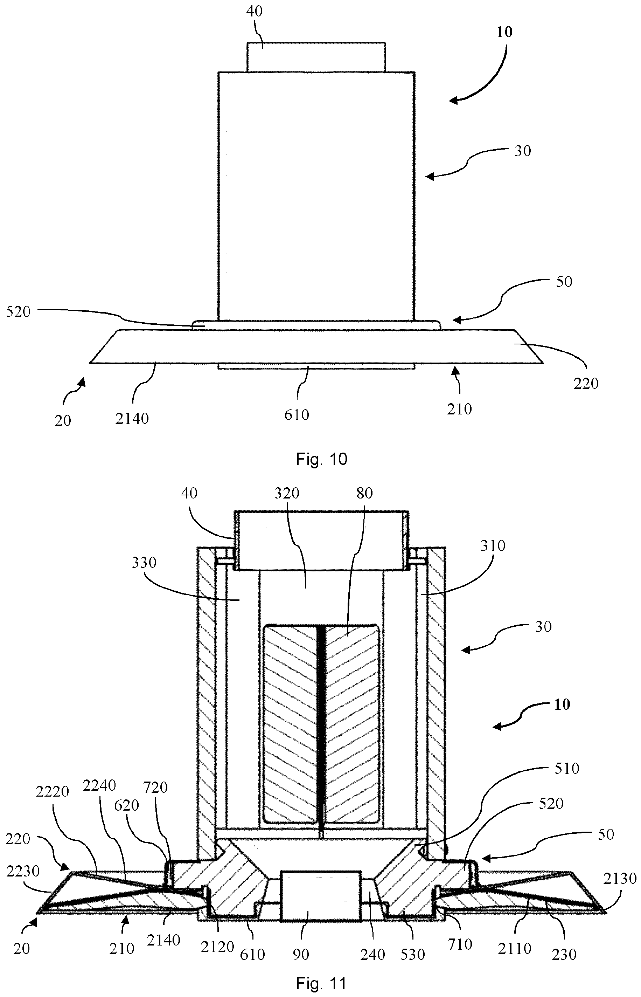

In Fig. 10 ist die zweite Deckenleuchte 10 von einer Seite gezeigt. Dabei ist eine Halterung 50 sichtbar, die einstückig mit einer quasi kreisscheibenförmigen mittleren Halteabschnitt 520 ausgebildet ist. Der Kühlkörper 30 und das Optikmodul 20 sind an der Halterung 50 befestigt, sodass die ganze zweite Deckenleuchte 10 eine Einheit bildet. Insbesondere sind der Kühlkörper 30, die Halterung 50 und das Optikmodul 20 konzentrisch entlang einer Längsachse angeordnet.

Fig. 11 zeigt die zweite Deckenleuchte 10 in einer Querschnittsansicht, sodass auch interne Komponenten und Strukturen sichtbar sind. Unter anderem ist ersichtlich, dass der Kühlkörper 30 einen hohlen Innenraum 320 aufweist. Im Innenraum 320 ist ein Betriebsgerät 80 angeordnet. Der Kühlkörper 30 bildet ein Gehäuse der zweiten Deckenleuchte 10.

Die Halterung 50 umfasst neben dem mittleren Halteabschnitt 520 einen oberen Halteabschnitt 510 und einen untere Halteabschnitt 530. Die drei Halteabschnitte 510, 520, 530 weisen jeweils verschiedene Radien und eine identische zentrale Öffnung auf. Insbesondere weist der obere Halteabschnitt 510 den kleinsten Radius auf und mittlere Halteabschnitt 520 den grössten Radius.

Das untere Optikelement 210 ist einstückig aus einem transparenten Material hergestellt. Es ist im Wesentlichen kreisringscheibenförmig ausgestaltet und umfasst eine äussere Seitenkante 2130 und eine innere Seitenkante 2120 auf. Die beiden Seitenkanten 2120, 2130 umschreiben jeweils eine kreisförmige Bahn.

Weiter umfasst das untere Optikelement 210 eine Serie von integralen Linienprismen 2110 als Auslenkstruktur. Insbesondere sind die Linienprismen 2110 dazu ausgebildet, über die innere Seitenkante 2120 in das untere Optikelement 210 eingestrahltes Licht selektiv umzulenken und über die Unterseite 2140 des unteren Optikelements 210 abzustrahlen.

Das obere Optikelement 220 ist ein aus einem umgeformten hochpolierten Metallblech gebildeter Reflektor. Es ist im Wesentlichen kreisringförmig und umfasst eine Oberseite 2240 mit einem inneren Bereich 2210 und einem äusseren abfallenden Bereich 2220, die an einer kreisförmigen Vertiefungslinie ineinander übergehen. An seinem äusseren Ende geht der äussere Bereich 2220 in einen Randbereich 2230 des oberen Optikelements 220 über.

Der untere Halteabschnitt 530 ist dem unteren Optikelement 210 zugeordnet, indem er innerhalb der zentralen Öffnung des unteren Optikelements 210 liegt. Dabei ist ein Aussenrand der unteren Halteplatte 530 mit einem unteren Leuchtdioden-Streifen 710 als Leuchtmittel bestückt. Die Leuchtdioden des unteren Leuchtdioden-Streifens 710 sind so ausgerichtet, dass von ihnen abgestrahltes Licht radial durch die innere Seitenkante 2120 in das untere Optikelement 210 radial nach aussen einstrahlt. Im unteren Optikelement 210 wird das so eingestrahlte Licht von den Linienprismen 2110 umgelenkt, geformt und nach unten in einer definierten Art und Weise als Direktlicht abgegeben.

In ähnlicher Weise ist der mittlere Halteabschnitt 520 dem oberen Optikelement 220 zugewiesen, indem sie innerhalb der zentralen Öffnung des oberen Optikelements 220 liegt. Ein Aussenrand des mittleren Halteabschnitts 520 ist mit einem oberen Leuchtdioden-Streifen 720 als Leuchtmittel ausgestattet. Nach aussen hin ist der obere Leuchtdioden-Streifen 720 von einer ringförmigen transparenten Abdeckung 620 als optische Komponente eingefasst. Die Leuchtdioden des oberen Leuchtdioden-Streifens 720 sind so ausgerichtet, dass von ihnen abgestrahltes Licht durch die zweite Abdeckung hindurch radial auf die geformte Oberfläche des oberen Optikelements 220 strahlt. Die ringförmige Abdeckung 620 schützt den oberen Leuchtdioden-Streifen und kann so ausgebildet sein, dass das Licht in bestimmungsgemässer Art und Weise geformt beziehungsweise gerichtet wird. Das abgestrahlte Licht wird grösstenteils am inneren Bereich 2210 vorbei auf den äusseren abfallenden Bereich 2220 gestrahlt von dem es in vordefinierter Weise nach oben als Indirektlicht reflektiert wird.

Zwischen dem oberen Optikelement 220 und dem unteren Optikelement 210 ist eine Trennfolie 230 eingelegt, welche die beiden Optikelemente 210, 220 optisch voneinander trennt. Eine Unterseite der Trennfolie 230 ist dabei reflektiv ausgestaltet, sodass auf diese Seite auftreffendes Licht nach unten in das untere Optikelement 210 geleitet wird. Das untere Optikelement 210 ist in das obere Optikelement 220 eingelegt, sodass der Randbereich 2230 des oberen Optikelements 220 die äussere Seitenkante 2130 des unteren Optikelements 210 nach aussen hin abdeckt. Das untere Optikelement 210 und das äussere Optikelement 220 sind miteinander verbunden.

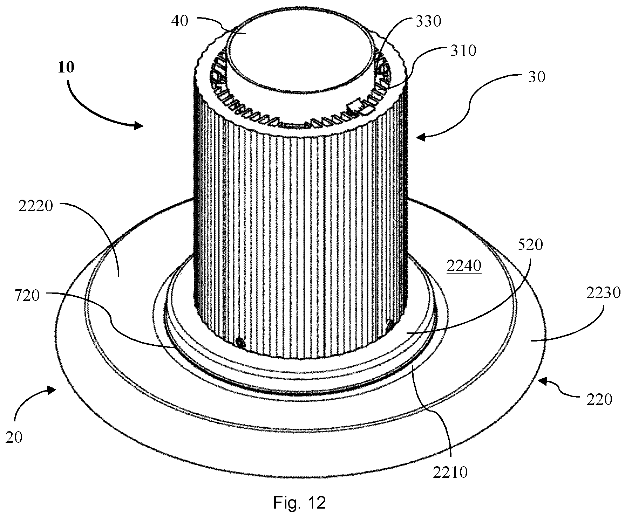

Der Kühlkörper 30 ist an seinem an den Innenraum 320 angrenzenden inneren Umfang mit einer Vielzahl sich radial nach innen erstreckenden Kühllamellen 310 versehen. Wie in Fig. 12 gut ersichtlich ist, sind die Kühllamellen 310 jeweils in einer Aufsicht gerade geformt.

Fig. 11 und Fig 12 zeigen, dass die Spalte zwischen den Kühllamellen 31 des Kühlkörpers 3 Luftstromdurchgänge 330 bilden. Insbesondere kann Luft im Bereich des oberen Halteabschnitts 510 zwischen dem mittleren Halteabschnitt 520 und dem Kühlkörper 30 vorbei durch die Luftstromdurchgänge 330 nach oben strömen und insbesondere den oberen Leuchtdioden-Streifen 720 sowie auch den unteren Leuchtdioden-Streifen 710 kühlen. Zudem kann Luft an der Sensoreinheit 90 vorbei durch die zentralen Öffnungen der drei Halteabschnitte 510, 520, 530 beziehungsweise den Durchgang 240 und am Betriebsgerät 80 vorbei durch den Innenraum 320 des Kühlkörpers 30 nach oben strömen. Auf diese Weise kann weiter eine Luftkühlung bereitgestellt werden und der Innenraum 320 kann gleichzeitig als Luftstromdurchgang funktionieren.

Das Betriebsgerät 80 ist an die beiden Leuchtdioden-Streifen 710, 720 und an die Sensoreinheit 90 angeschlossen. Zudem ist es an eine Steuereinheit gekoppelt, über welche die zweite Deckenleuchte 10 eingestellt beziehungsweise konfiguriert werden kann.

In der perspektivischen Ansicht von Fig. 12 ist zudem gut ersichtlich, dass der obere Leuchtdioden-Streifen 720 entlang des gesamten Umfangs der mittleren Halteplatte 520 verläuft und somit das obere Optikelement 220 gleichmässig anstrahlt.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung beziehungsweise vorliegende Offenbarung weitere Ausführungsbeispiele mit irgendwelchen Kombinationen von Merkmalen ab, die von den explizit beschriebenen Merkmalskombinationen abweichen können. Auch können spezifische Merkmale beziehungsweise Merkmalsgruppen, wie sie in den Figuren und den zugehörigen Abschnitten der Beschreibung offenbart sind, in den allgemeineren Ausführungsformen der Erfindung, wie sie im Zusammenhang mit der Beschreibung der Erfindung offenbart sind, kombiniert werden. Insbesondere können solche spezifischen Merkmale beziehungsweise Merkmalsgruppen losgelöst von weiteren spezifischen in den Figuren gezeigten Merkmalen in den allgemeineren Ausführungsformen der Erfindung vorgesehen sein. Beispielsweise können die Kühllamellen des Kühlkörpers der Ausführungsform der erfindungsgemässen Leuchte in einer Aufsicht gekrümmt sein, wie dies in den Figuren dargestellt ist, ohne dass weitere spezifische Merkmale der Figuren wie beispielsweise die spezifische Anzahl von Kühllamellen ebenfalls vorhanden sein müssen. Es versteht sich, dass Fachleute in der Lage sind, spezifische Merkmale aus der Beschreibung der Figuren in die Ausführungsformen der Beschreibung der Erfindung zu übernehmen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen. Auch umfasst die Offenbarung Zwischenverallgemeinerungen von Merkmalen beziehungsweise Merkmalsgruppen von in den Figuren und den zugehörigen Abschnitten der Beschreibung gezeigten Ausführungsbeispielen. Das heisst es können spezifische Merkmale beziehungsweise Merkmalsgruppen, wie sie in den Figuren und den zugehörigen Abschnitten der Beschreibung offenbart sind, in den allgemeineren Ausführungsformen der Erfindung, wie sie im Zusammenhang mit der Beschreibung der Erfindung offenbart sind, kombiniert werden. Insbesondere können solche spezifischen Merkmale beziehungsweise Merkmalsgruppen losgelöst von weiteren spezifischen in den Figuren gezeigten Merkmalen in den allgemeineren Ausführungsformen der Erfindung vorgesehen sein. Beispielsweise kann eine wie im Zusammenhang mit der zweiten Deckenleuchte der Fig. 9 bis 12 beschriebene ringförmige oder anders geformte transparente Abdeckung in der generellen Ausführungsform der erfindungsgemässen Leuchte vorgesehen werden. Dabei ist dem Fachmann klar, dass die Form der Abdeckung auf die Form des Leuchtmittels der Leuchte beziehungsweise eine Halterung dieses Leuchtmittels hin angepasst werden kann. Es versteht sich, dass Fachleute in der Lage sind, spezifische Merkmale aus der Beschreibung der Figuren in die Ausführungsformen der Beschreibung der Erfindung zu übernehmen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr", "quasi" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Optikmodul (2; 20) für eine Deckenleuchte (1; 10) mit einem transparenten unteren Optikelement (21; 210),
wobei das untere Optikelement (21; 210) eine Unterseite (214; 2140), eine Seitenkante (212; 2120) und eine Auslenkstruktur (211; 2110) umfasst, wobei die Auslenkstruktur (211; 2110) dazu ausgestaltet ist, durch die Seitenkante (212; 2120) eingestrahltes Licht umzuleiten, sodass es durch die Unterseite (214; 2140) abgestrahlt wird,
**gekennzeichnet durch** ein oberes Optikelement (22; 220), das mit dem unteren Optikelement (21; 210) verbunden und von diesem optisch getrennt ist,
wobei das obere Optikelement (22; 220) eine Oberseite (224; 2240) und eine Lichtlenkstruktur (221, 222) umfasst,
wobei die Lichtlenkstruktur (221, 222) des oberen Optikelements (22; 220) dazu ausgebildet ist, seitlich auf das obere Optikelement (22; 220) gestrahltes Licht von seiner Oberseite (224; 2240) abzustrahlen.

2. Optikmodul (2; 20) nach Anspruch 1, das eine Trennschicht (23; 230) aufweist, welche das obere Optikelement (22; 220) vom unteren Optikelement (21; 210) optisch trennt.

3. Optikmodul (2; 20) nach Anspruch 2, wobei die Trennschicht (23; 230) als Folie geformt ist.

4. Optikmodul (2; 20) nach Anspruch 2 oder 3, wobei die Trennschicht (23; 230) in Richtung des unteren Optikelements (21; 210) reflektierend ausgebildet ist.

5. Optikmodul nach Anspruch 4, wobei die Trennschicht als TIR-Element ausgestaltet ist.

6. Optikmodul (2; 20) nach einem der vorangehenden Ansprüche, das quasi scheibenförmig ausgestaltet ist.

7. Optikmodul (2; 20) nach Anspruch 6, die eine runde äussere Abgrenzung aufweist.

8. Optikmodul (2; 20) nach Anspruch 6 oder 7, das einen zentralen Durchgang (24) umfasst, der sich durch das obere Optikelement (22; 220) und das untere Optikelement (21; 210) hindurch erstreckt.

9. Optikmodul (2; 20) nach einem der vorangehenden Ansprüche, das dazu ausgestaltet ist, Licht von der Oberseite (224; 2240) des oberen Optikelements (22; 220) flacher abzustrahlen als durch die Unterseite (214; 2140) des unteren Optikelements (21; 210).

10. Optikmodul (2; 20) nach einem der vorangehenden Ansprüche, wobei das obere Optikelement (22; 220) als Reflektor ausgebildet ist.

11. Optikmodul (2; 20) nach einem der vorangehenden Ansprüche, wobei die Auslenkstruktur (211; 2110) des unteren Optikelements (21; 210) Prismen (211; 2110) umfasst, die zum Umlenken des Lichts ausgestaltet sind.

12. Optikmodul (2; 20) nach Anspruch 11, wobei die Prismen (211; 2110) der Auslenkstruktur (211; 2110) als Linienprismen ausgebildet sind.

13. Leuchte (1; 10) mit einem Optikmodul (2; 20) gemäss einem der vorangehenden Ansprüche, einem unteren Leuchtmittel (71; 710) und einem oberen Leuchtmittel (72; 720), wobei das untere Leuchtmittel (71; 710) entlang der Seitenkante (212; 2120) des unteren Optikelements (21; 210) so angeordnet ist, dass vom unteren Leuchtmittel (71; 710) abgestrahltes Licht durch die Seitenkante (212; 2120) in das untere Optikelement (21; 210) einstrahlt, und wobei das obere Leuchtmittel (72; 720) benachbart zum oberen Optikelement (22; 220) so angeordnet ist, dass vom oberen Leuchtmittel (72; 720) abgestrahltes Licht seitlich auf das obere Optikelement (22; 220) strahlt.

14. Leuchte (1; 10) nach Anspruch 13, wobei das obere Leuchtmittel (72; 720) und das untere Leuchtmittel (71; 710) jeweils als Leuchtdioden-Streifen ausgestaltet sind.

15. Leuchte (1; 10) nach Anspruch 13 oder 14, die eine Halterung (5; 50) umfasst, an der das untere Leuchtmittel (71; 710) und das obere Leuchtmittel (72; 720) angeordnet sind.

16. Leuchte (1; 10) nach Anspruch 15, wobei die Halterung (5; 50) aus mehreren aufeinander liegenden Scheiben (51, 52, 53) gebildet ist.

17. Leuchte (1; 10) nach einem der Ansprüche 13 bis 16, die einen Kühlkörper (3; 30) umfasst, wobei der Kühlkörper (3; 30) benachbart zur Oberseite (224; 2240) des oberen Optikelements (22; 220) mit dem Optikmodul (2; 20) verbunden ist und wobei der Kühlkörper (3; 30) einen hohlen Innenraum (32; 320) aufweist.

18. Leuchte (1; 10) nach Anspruch 15 oder 16 und Anspruch 17, wobei der Kühlkörper (3; 30) an der Halterung (5; 50) montiert ist.

19. Leuchte (1; 10) nach Anspruch 18, wobei das Optikmodul (2; 20), die Halterung (5; 50) und der Kühlkörper (3; 30) konzentrisch entlang einer Achse angeordnet sind.

20. Leuchte (1; 10) nach einem der Ansprüche 17 bis 19, die ein Betriebsgerät (8; 80) umfasst, das im Innenraum (32; 320) des Kühlkörpers (3; 30) angeordnet ist.

21. Leuchte (1; 10) nach einem der Ansprüche 17 bis 20, wobei der Kühlkörper (3; 30) quasi zylinderförmig geformt ist.

22. Leuchte (1; 10) nach Anspruch 21, wobei der Kühlkörper (3; 30) mehrere axiale Luftstromdurchgänge (33; 330) aufweist.

23. Leuchte (1; 10) nach einem der Ansprüche 17 bis 22, wobei der Kühlkörper (3; 30) sich nach aussen erstreckende Kühllamellen (31; 310) aufweist.
